# EUROPEAN PATENT SPECIFICATION

(11) **EP 3 939 917 B1**
(45) Date of publication and mention of the grant of the patent: **14.02.2024**
(21) Application number: 20769503.2
(22) Date of filing: 25.02.2020
(51) Int. Cl.: B65G 67/60, H04W 4/30, H04W 4/80, H04W 76/10, H04W 84/10

(54) **COMMUNICATION SYSTEM FOR UNMANNED CONVEYANCE VEHICLE**
KOMMUNIKATIONSSYSTEM FÜR UNBEMANNTES FÖRDERFAHRZEUG
SYSTÈME DE COMMUNICATION POUR VÉHICULE DE TRANSPORT SANS CONDUCTEUR

(30) Priority: 12.03.2019 JP 2019044830
(43) Date of publication of application: 19.01.2022
(73) Proprietor: Kabushiki Kaisha Toyota Jidoshokki, Kariya-shi, Aichi 448-8671 (JP)
(72) Inventor: NAKAGAWA, Masato, Kariya-shi, Aichi 448-8671 (JP); NAGAYA, Takahiko, Kariya-shi, Aichi 448-8671 (JP)
(74) Representative: Vigand, Philippe
(86) International application number: PCT/JP2020/007441
(87) International publication number: WO 2020/184168

(56) References cited:
- JP-B2- 6 187 382
- US-A- 5 345 384

## Description

### TECHNICAL FIELD

The present invention relates to a communication system for an automatic guided vehicle.

### BACKGROUND ART

Conventionally, a communication system, for example, disclosed in Patent Document 1 has been known. This communication system is used for a transport facility that controls a plurality of devices in a warehouse. This communication system includes a console terminal that can wirelessly communicate with controllers of the plurality of devices in the warehouse. This console terminal can communicate with the devices using a network in the warehouse. The console terminal selects a device to be communicated and can show display information sent from the device.

### Citation List

### Patent Document

[Patent Document 1] Japanese Patent Application Publication No. 2015-214408

Document JP6187382B2 discloses an article conveyance equipment.

### SUMMARY OF THE INVENTION

### Technical Problem

Here, in a system using a plurality of automatic guided vehicles, communication between a console terminal and a control device of each of the automatic guided vehicles is required. That is, there is a demand for a communication system that allows an operator who uses a console terminal while working to grasp conditions of the automatic guided vehicles positioned nearby. Here, the automatic guided vehicles are used as vehicles for transporting containers unloaded from a ship to a desired location by travelling a preset route in a harbor. This type of a system using these automatic guided vehicles is built in a very large site. Thus, if the communication system used in a limited space in the warehouse, as disclosed in the above-mentioned Patent Document 1, is applied to the system for the automatic guided vehicles, the communication system becomes very complicated. Further, although information of each of the automatic guided vehicles can be obtained by an upper level control device that control the automatic guided vehicles, an operator cannot directly obtain the information of each of the automatic guided vehicles on site. When it is to access an information control device to obtain such information, there may be a problem that the communication is congested. Therefore, there is a need for other communication systems capable of communicating with automatic guided vehicles in a suitable manner.

An object of the present invention is to provide a communication system for an automatic guided vehicle that can communicate with the automatic guided vehicle in a suitable manner.

### Solution to Problem

A communication system for an automatic guided vehicle is defined in claim 1.

In the communication system for the automatic guided vehicle, the automatic guided vehicle has identification information related to the control device. In contrast, the terminal is communicable with the communication device based on the identification information which is read by the terminal. That is, the terminal identifies, on site, the automatic guided vehicle to be communicated therewith with a simple operation, which involves only reading the identification information. Further, the terminal directly communicates with the communication device that is mounted on the automatic guided vehicle, and sends and receives information related to the control device, instead of communicating via the upper level control device. Thus, the operator can grasp a state of the control device of the automatic guided vehicle quickly, irrespective of the congestion of the line to access the upper level control device. Further, since the operator can access the communication device of other automatic guided vehicles using the terminal, the structure of the communication system as a whole may be simplified, as compared with a case where a console and the like is provided in the automatic guided vehicle itself with respect to the control devices. Therefore, according to this communication system, communication with the automatic guided vehicles can be achieved in a suitable manner.

According to the communication system for the automatic guided vehicle, a plurality of control devices are mounted on the automatic guided vehicle, and the terminal can use information related to each of the control devices based on the read identification information. This allows the operator to use information from each of the plurality of control devices mounted on the automatic guided vehicle by using one terminal.

The automatic guided vehicle has a plurality of pieces of identification information, each being linked to its associated one of the plurality of control devices, and the terminal can use the information related to the control device to which the identification information is linked. In this case, the operator can easily use information that the operator wants to grasp by only reading the identification information corresponding to the control device that the operator wants to grasp.

The terminal can select at least one of the control devices from the plurality of control devices each identified with the identification information, and can use information related to the selected one of the control devices. In this case, the operator can selectively obtain information of the control device that the operator wants to grasp out of the plurality of control devices of the automatic guided vehicle, only by reading one of the pieces of identification information.

Communication between the terminal and the automatic guided vehicle may be achieved by a short-range connection means. In this case, for the operator, communicating with the automatic guided vehicle positioned nearby can be achieved quickly without being influenced by congestion of a wide area network. Additionally, for the operator, since it can communicate with the automatic guided vehicle positioned nearby, it is possible to prevent accidental communication with other automatic guided vehicles.

### Advantageous Effects of Invention

According to the present invention, a communication system for an automatic guided vehicle that can communicate with the automatic guided vehicle in a suitable manner can be provided.

### BRIEF DESCRIPTION OF THE DRAWINGS

FIG. 1 is a schematic plan view, illustrating a state of a container terminal in which a communication system for an automatic guided vehicle according to an embodiment of the present invention is used.
FIG. 2 is schematic side view, illustrating a state of an automatic guided vehicle in the container terminal of FIG. 1.
FIG. 3 is a schematic view of the automatic guided vehicle to which identification information is given.
FIG. 4 is a block diagram showing a system configuration of the communication system.
FIG. 5 is a schematic view, illustrating a state of a control device mounted on the automatic guided vehicle.
FIG. 6 is a view illustrating an example of an operation screen of a terminal.
FIG. 7 is a schematic view of an example of the automatic guided vehicle to which identification information is given.
FIG. 8 is a schematic view of an automatic guided vehicle according to a comparative example.

### DESCRIPTION OF EMBODIMENTS

Hereinafter, an embodiment of the present invention will be described in detail with reference to the accompanying drawings. In the drawings, the same or equivalent parts are designated by the same reference numerals, and the redundant descriptions thereof are omitted.

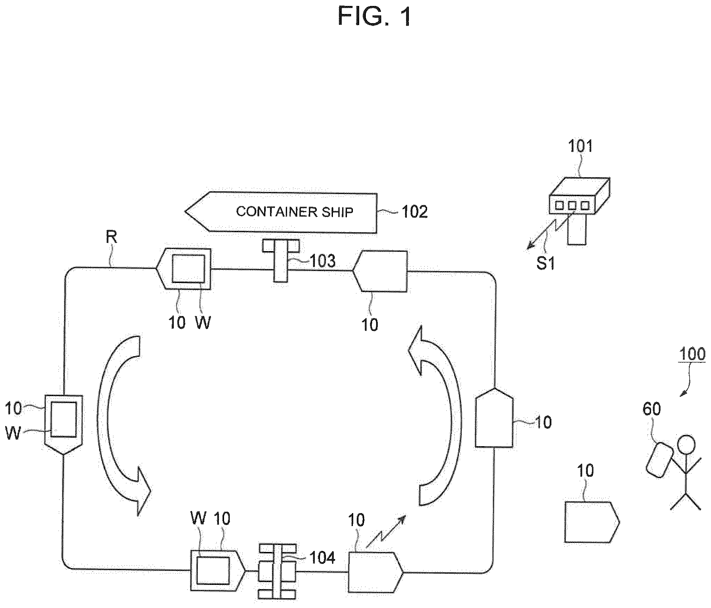

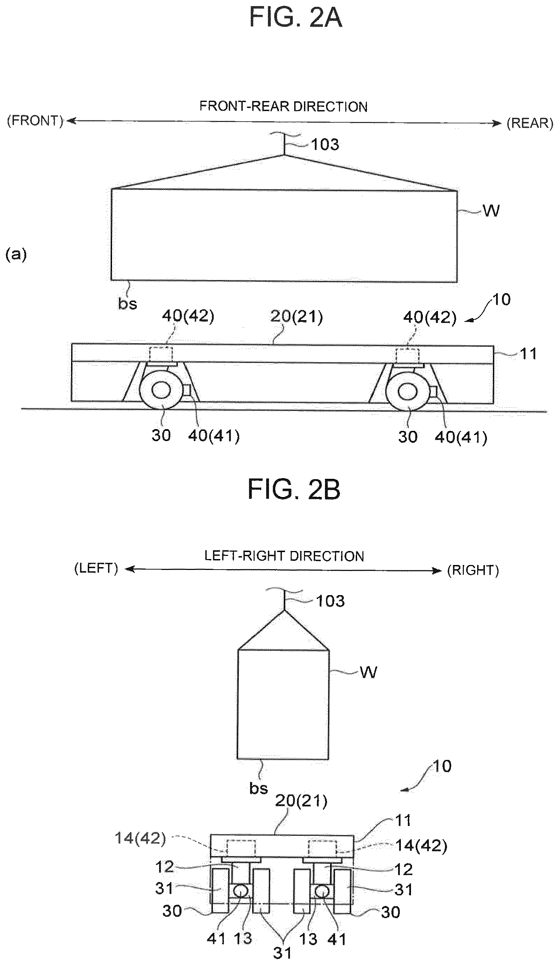

FIG. 1 is a schematic plan view, illustrating a state of a container terminal in which a communication system 100 for automatic guided vehicles 10 according to an embodiment of the present invention is used. FIGS. 2A and 2B are schematic side views, each illustrating a state of an automatic guided vehicle 10 in the container terminal of FIG. 1. Firstly, a configuration of an automatic guided vehicles 10 and an operation of the automatic guided vehicle 10 in the container terminal will be described with reference to FIGS 1, 2A and 2B.

As illustrated in FIG. 1, at the container terminal in the harbor, a plurality of automatic guided vehicles (AGV) 10 travels on a preset travel route R in response to a command S1 from a traffic control tower 101 (an upper level control device) serving as an external command center. The automatic guided vehicles 10 travel on the travel route R upon receiving the command S1 that controls travel conditions of the automatic guided vehicles 10 from the traffic control tower 101 wirelessly. Each of the automatic guided vehicles 10 stops at a loading position where the container W is loaded thereon in accordance with the command S1. A position of a crane 103 is controlled by the traffic control tower 101. The crane 103, with the container W suspended therefrom, moves to the loading position where the container W is loaded. Information of the position of the crane 103 is fed back to the traffic control tower 101. The container W is loaded on each of the automatic guided vehicles 10 from a container ship 102 by the crane 103. The container W unloaded by the crane 103 is loaded on the automatic guided vehicle 10. The automatic guided vehicle 10 on which the container W is loaded travels to a rubber tyre crane 104. The rubber tyre crane 104 unloads the container W from the automatic guided vehicle 10. When becoming empty with the container W unloaded, the automatic guided vehicle 10 returns to the crane 103 along the travel route R.

As illustrated in FIGS.2A and 2B, a vehicle body 11 of each of the automatic guided vehicles 10 includes a loading platform 20, a plurality of drive wheels 30, and a plurality of motors 40. The loading platform 20 has a placement surface 21 on which the container W suspended from the crane 103 is to be placed. The placement surface 21 is a flat surface extending horizontally. The placement surface 21 has a quadrilateral shape which is formed wider than a bottom surface bs of the container W. The motor 40 generates a power to drive the drive wheels 30. The motor 40 includes a driving motor 41 as a drive power source and a steering motor 42. The driving motor 41 generates a driving power for moving the automatic guided vehicle 10 in a front-rear direction. The steering motor 42 generates a power for steering the drive wheel 30 to change a travelling direction of the automatic guided vehicle 10.

Next, the communication system 100 for the automatic guided vehicles 10 according to the embodiment of the present invention will be described. The communication system 100 is a system that enables a control device of a specific automatic guided vehicle 10, out of the plurality of automatic guided vehicles 10, to communicate with a terminal 60. For example, the communication system 100 of the present embodiment is used when it becomes necessary to grasp a state of the control device of the specific automatic guided vehicle 10 out of the above described automatic guided vehicles 10 travelling autonomously. As illustrated in FIG. 1, the communication system 100 includes the plurality of automatic guided vehicles 10, a communication device (which corresponds to a short-range communication device 71 described later) mounted on each of the automatic guided vehicles 10, the traffic control tower 101 controlling the plurality of automatic guided vehicles 10, and the terminal 60 connectable with the communication device. Although only one terminal 60 is illustrated in FIG. 1, the communication system 100 may be provided with a plurality of terminals 60 when the terminal 60 is given to each of a plurality of operators.

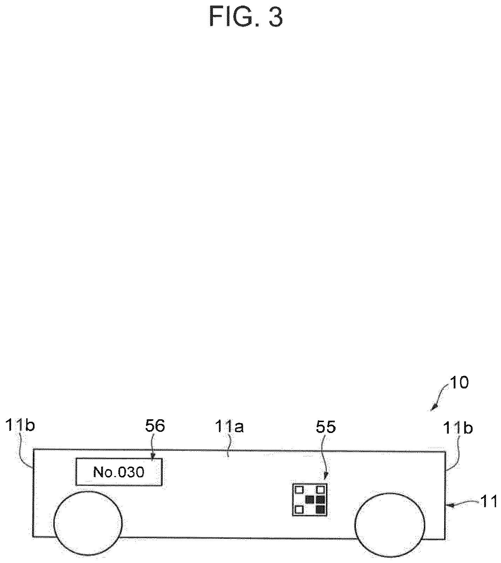

In the communication system 100, the automatic guided vehicle 10 having the communication device to be communicated with the terminal 60 is determined using identification information given individually to each of the automatic guided vehicles 10. FIG. 3 is a schematic view of an example of the automatic guided vehicle 10 to which identification information is given. As illustrated in FIG. 3, identification information related to the control device of each of the automatic guided vehicles 10 is given to the automatic guided vehicle 10. The identification information may at least include specific information given to each of the automatic guided vehicles 10. The identification information is a piece of information with which one automatic guided vehicle 10 can be identified from the plurality of automatic guided vehicles 10. Thus, the identification information can be used to identify which one of the automatic guided vehicles 10 is a control device mounted on. In an example illustrated in FIG. 3, the identification information is represented by a mark 55 of a QR code (registered trademark). The mark 55 is drawn as a specific figure so as to include specific information. The mark 55 is represented to be read as an image so that specific information including the identification information could be grasped. Other than QR code, the identification information may be represented by a pattern or a code, such as a barcode from which specific contents may be grasped when it is read, a combination of symbols, or the like. Information of the identification information may be represented directly with characters and numbers. For example, as illustrated in FIG. 3, the identification information may be expressed by directly showing a unit number assigned to each of the automatic guided vehicles 10 on the unit number display member 56 set in the vehicle body 11.

The mark 55 is shown on the vehicle body 11 of the automatic guided vehicle 10. Here, the mark 55 is shown on a side surface 11a of the vehicle body 11. Additionally, the unit number display member 56 is shown on the side surface 11a of the vehicle body 11. Positions and the numbers of the marks 55 and the unit number display members 56 are not specifically limited, which may be shown on an end surface 11b of the vehicle body 11, and a plurality of marks 55 and a plurality of unit number display members 56 may be shown on the side surface 11a and the end surface 11b.

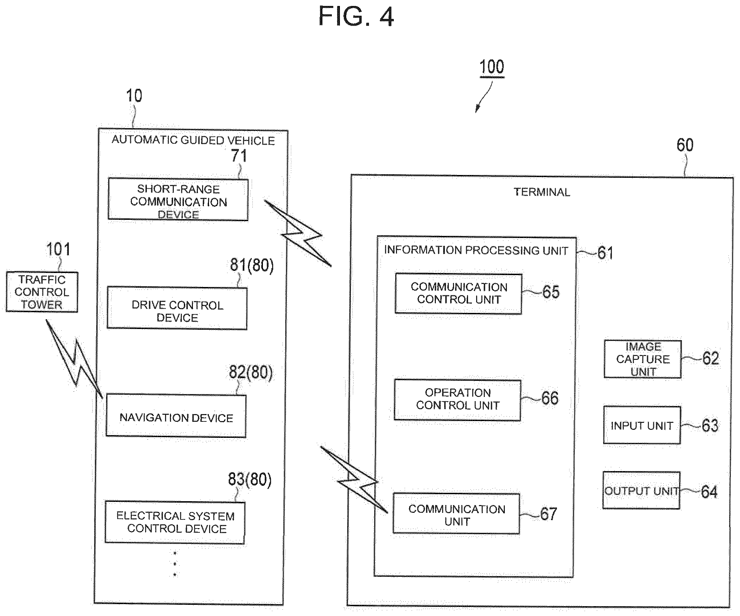

Next, with reference to FIG. 4, a system configuration of the communication system 100 for the automatic guided vehicle 10 according to the embodiment of the present invention will be described. FIG. 4 is a block diagram showing a system configuration of the communication system 100.

As illustrated in FIG.4, the automatic guided vehicles 10 each include the short-range communication device 71 and a plurality of control devices 80.

The short-range communication device 71 is a device that sends and receives information related to the control devices 80 mounted on the automatic guided vehicles 10. The short-range communication device 71 receives information associated with each control device 80, from the plurality of control devices 80. The short-range communication device 71 is a part configured to exchange signals with the terminal 60 to communicate therewith. The short-range communication device 71 sends and receives various information to and from the terminal 60. The short-range communication device 71 establishes mutual communication with the terminal 60 when the terminal 60 to be communicated with the short-range communication device 71 is positioned in a predetermined range. A short-range connection means such as Bluetooth (registered trademark) is desirably used for the short-range communication device 71 so that communication is established when the automatic guided vehicle 10 and the terminal 60 approach each other, irrespective of radio wave conditions. The short range and the predetermined range mentioned here correspond to a distance and its range that allow the terminal 60 to communicate with the short-range communication device 71 of the automatic guided vehicle 10, which does not include a distance that allows the terminal 60 and the short-range communication device 71 to communicate with each other from the outside of the container terminal. The method of establishing communication by the short-range communication device 71 is not specifically limited, but the communication may be accomplished by Wi-Fi connection. Furthermore, the predetermined range is not limited to the short range, and methods such as 4G and 5G communication optimized for the communication within the container terminal may be applied. Nevertheless the claimed solution is limited to the use of short range communication.

The control device 80 is a device built in the vehicle body 11 of the automatic guided vehicle 10. The control device 80 is incorporated in the automatic guided vehicle 10 so as to achieve a specific function. The control devices 80 have unique information indicating their own conditions. These pieces of information need be checked at a timing at which an operator performs maintenance and inspection. As information indicating the states of the control devices 80, information such as an operation time, an abnormality record, input and output information of sensors, the other, remaining amount of energy (a state of charge of a battery), a steering angle, tyre pressure, the height of a lifter (a device that raise and lowers cargo or a machine frame itself) may be listed. In FIG. 4, the automatic guided vehicle 10 is specifically equipped with a drive control device 81, a navigation device 82, an electrical system control device 83, and the like, as the control devices 80. Additionally, the automatic guided vehicle 10 may include other control devices such as a control device for a lifter, as required.

The drive control device 81 is a device that controls operations of the motor of the automatic guided vehicle 10 and the like. The drive control device 81 controls the driving part so that the automatic guided vehicle 10 travels in a desirable direction and at a desirable speed, and stores such travelling records. The navigation device 82 is a device that guides the automatic guided vehicle 10 which route the automatic guided vehicle 10 should travel when the automatic guided vehicle 10 travels autonomously. The navigation device 82 can communicate with the traffic control tower 101, and navigates the automatic guided vehicle 10 according to a command from the traffic control tower 101. It is noted that the navigation device 82 is not a device for communicating with the terminal 60. The electrical system control device 83 is a device that controls an electrical system of the automatic guided vehicle 10. For example, the electrical system control device 83 can control an engine generator.

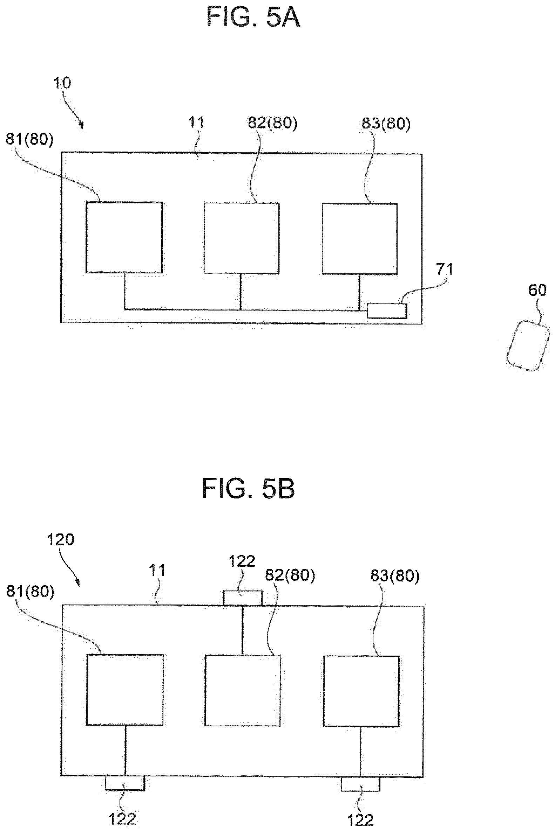

As illustrated in FIG. 5A, pieces of information related to these control devices 80 can be used by the terminal 60 when communication between the terminal 60 and the short-range communication device 71 is established. Each of the control devices 80 is connected to the short-range communication device 71, and pieces of information of the control devices 80 are used by the terminal 60 via the short-range communication device 71. The short-range communication device 71 may be built in the control device 80, or may be provided separately from the control device 80 with the short-range communication device 71 mounted on the automatic guided vehicle 10.

As illustrated in FIG. 4, the terminal 60 includes an information processing unit 61, an image capture unit 62, an input unit 63, and an output unit 64. A general purpose machine such as a smartphone and a tablet terminal may be used as the terminal 60. When a general purpose machine is used as the terminal 60, an operator installs a dedicated application software on the terminal 60. Further, a terminal specifically provided for the communication system 100 for the automatic guided vehicle 10 may be employed as the terminal 60.

The image capture unit 62 is a part configured to obtain an image by photographing an image.
The image capture unit 62 is formed by a built in camera provided in the terminal 60. It is noted that an external camera may be used as the image capture unit 62. The input unit 63 is a part configured to receive an input from the operator. The input unit 63 includes a touch panel, a microphone for sound recognition, and the like. The output unit 64 is a part configured to output information to the operator. The output unit 64 includes a monitor, a speaker, and the like.

The information processing unit 61 is a part configured to execute various processing to operate the automatic guided vehicle 10. The information processing unit 61 is provided with a processor, a memory, and a storage. The processor is a computing unit such as a CPU (Central Processing Unit). The memory is a memory medium such as a ROM (Read Only Memory) and a RAM (Random Access Memory). The storage is a memory medium such as an HDD (Hard Disk Drive). The processor controls a memory, a storage, a communication interface, and a user interface, thereby achieving functions of the information processing unit 61, which will be described later. In the information processing unit 61, for example, a program stored in the ROM is loaded into the RAM and the program loaded into the RAM is executed by the CPU, thereby achieving various functions.

The information processing unit 61 includes a communication control unit 65, an operation control unit 66, and a communication unit 67.

The communication control unit 65 is a part configured to control communication by the terminal 60 with the short-range communication device 71 of a specific automatic guided vehicle 10. The communication control unit 65 permits communication with the short-range communication device 71 of the automatic guided vehicle 10 based on identification information read from an image captured by the image capture unit 62. The communication control unit 65 identifies an automatic guided vehicle 10 to be communicated therewith from the identification information in the image obtained by the image capture unit 62. Then, the communication control unit 65 controls the communication unit 67 so that the communication unit 67 can communicate with the short-range communication device 71 of the identified automatic guided vehicle 10. The communication control unit 65 controls the communication unit 67 so that communication between the communication unit 67 and the short-range communication device 71 of the identified automatic guided vehicle 10 is established. It is noted that the communication control unit 65 notifies the operator from the output unit 64 when communication cannot be established by any reason, i.e., being positioned too far, or when the identification information cannot be identified because the mark 55 or the unit number in the image are too small.

The communication unit 67 is a part configured to exchange signals with other devices and members to communicate therewith. The communication unit 67 sends and receives various information to and from the short-range communication device 71 of the automatic guided vehicle 10. The communication unit 67 communicates with the short-range communication device 71 of the automatic guided vehicle 10 by means corresponding to the short distance connection means employed in the short-range communication device 71.

The operation control unit 66 is a part configured to control operation on the terminal 60 when information is exchanged between the terminal 60 and the short-range communication device 71 of the automatic guided vehicle 10 with which communication with the terminal 60 is established. The operation control unit 66 outputs information helpful for the operator to operate via the output unit 64 when communicating with the short-range communication device 71 of the automatic guided vehicle 10.

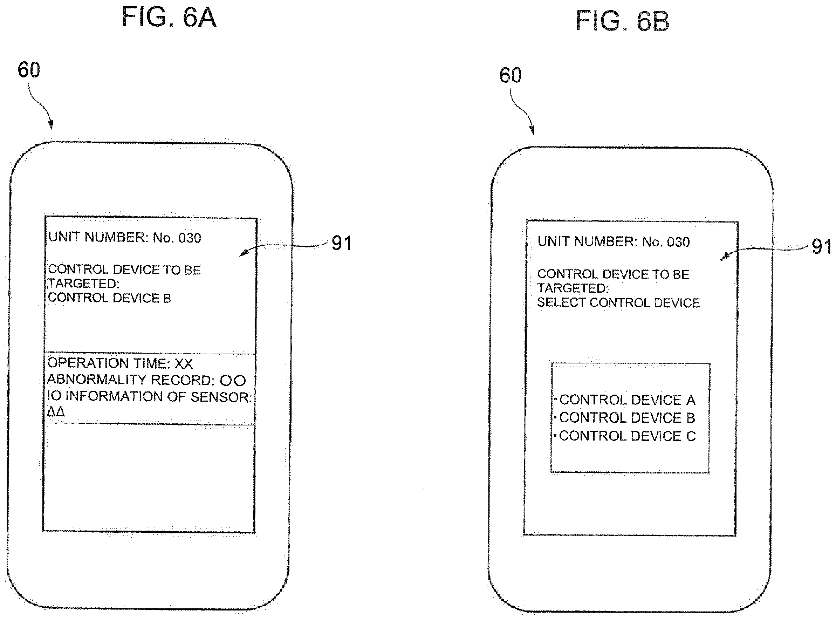

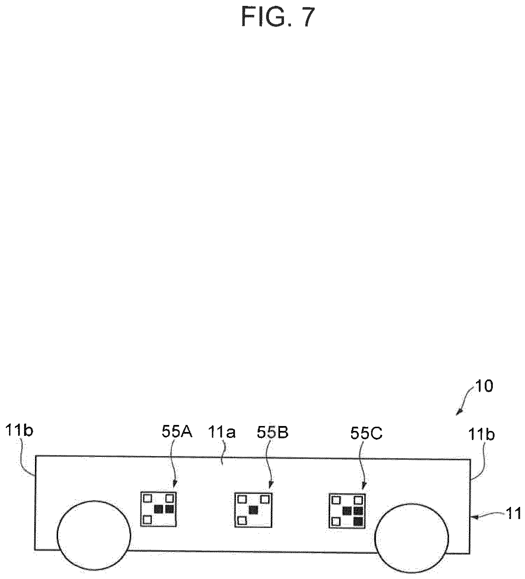

Here, referring to FIGS. 6A, 6B and 7, the control of the operation control unit 66 will be described. As has been described, the plurality of control devices 80 is mounted on the automatic guided vehicle 10. Thus, the terminal 60 can show information of each of the plurality of control devices 80. Here, as illustrated in FIG.7, the automatic guided vehicle 10 may have a plurality of the marks 55 including identification information linked to its associated one of the plurality of control devices 80. In this case, the terminal 60 shows the information related to each of the control devices 80 to which the identification information is linked.

For example, a mark 55A illustrated in FIG. 7 may include information identifying the drive control device 81, in addition to the identification information of the automatic guided vehicle 10. A mark 55B may include information identifying the navigation device 82, in addition to the identification information of the automatic guided vehicle 10. A mark 55C may include information identifying the electrical system control device 83, in addition to the identification information of the automatic guided vehicle 10. In this case, when the mark 55B is read by the image capture unit 62, the operation control unit 66 draws information indicating a state from the navigation device 82 via the communication unit 67 and the short-range communication device 71. Then, as illustrated in FIG. 6A, the operation control unit 66 shows the control device 80 (here, the navigation device 82) to be targeted, and information of such a control device 80 on the screen 91. When other marks 55A, 55C are read, similar process is executed on their corresponding control devices 80.

In addition, the terminal 60 can select at least one of the control devices 80 from the plurality of control devices 80 each identified with the identification information, and the terminal 60 can use the information related to the selected control device 80. For example, the automatic guided vehicle 10 has one patterned mark 55 as illustrated in FIG. 3. This mark 55 includes the identification information of the automatic guided vehicle 10 but does not include information that specifies the control device 80. In this case, the operation control unit 66 obtains information indicative a state from each of the control devices 80 of the automatic guided vehicle 10. Then, as illustrated in FIG. 6B, the operation control unit 66 shows contents allowing the operator to select information of which control devices 80 they want on the screen 91. Then, once the operator selects one control device 80, the operation control unit 66 shows information corresponding to the selected control device 80 on the screen 91, as illustrated in FIG. 6A. It is noted that the operation control unit 66 may acquire information of the selected control device 80 after the selection of the control device 80 is made.

Next, the operations and effects of the communication system 100 for the automatic guided vehicles 10 according to the embodiment of the present invention will be described.

In the communication system 100 for the automatic guided vehicles 10, each of the automatic guided vehicle 10 has pieces of identification information related to the control devices 80. In contrast, the terminal 60 is communicable with the short-range communication device 71 of the automatic guided vehicle 10 based on the identification information which is read by the terminal 60. That is, the terminal 60 identifies the short-range communication device 71 of the automatic guided vehicle 10 to be communicated therewith with a simple operation, which only involves reading the identification information. Further, it is possible that the terminal 60 directly communicates with the short-range communication device 71 that sends and receives pieces of information related to the control devices 80 mounted on the automatic guided vehicle 10, instead of communicating via the traffic control tower 101. Thus, the operator can grasp the states of the control devices 80 of the automatic guided vehicle 10 quickly, irrespective of the congestion of the line to access the traffic control tower 101.

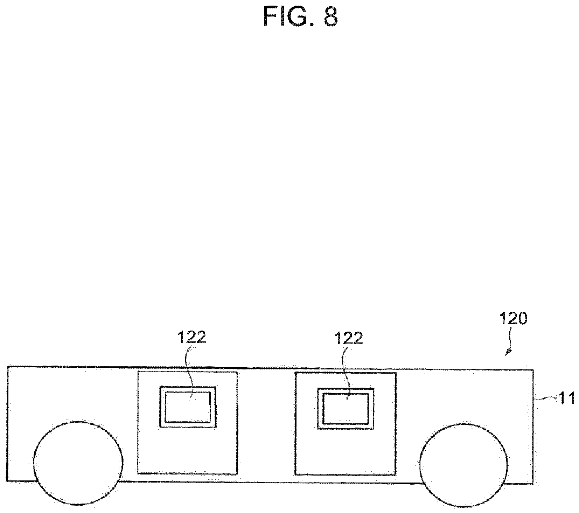

Further, since the operator can access to the short-range communication devices 71 of other automatic guided vehicles 10 using the terminal 60, the structure of the communication system as a whole may be simplified, as compared with a case where the automatic guided vehicle 10 itself has a console and the like so as to correspond to the control devices. For example, FIGS. 5B and 8 illustrate a schematic configuration of an automatic guided vehicle 120 according to a comparative example. The automatic guided vehicle 120 according to the comparative example has a console 122 corresponding to the control device 80 mounted on the vehicle body 11. Since this console is mounted on the vehicle body 11 that travels, an expensive console is used because it requires impact resistance and vibration resistance. Especially, the console 122 mounted to the side surface of the vehicle body 11 or the like is required to be dustproof, waterproof, and ultraviolet resistant, and the structures of the control devices 80 themselves are complicated, so that the cost is further increased. On the other hand, the automatic guided vehicle 10 is a vehicle that travels autonomously and is less likely to be directly operated by human, so that the frequency of use of the console 122 is low. That is, the console 122 has a problem that it is expensive for its frequency of use. A plurality of the control devices 80 is mounted on one automatic guided vehicle 10. In this case, a plurality of consoles 122 is required for each automatic guided vehicle 120, which further increases the cost. On the other hand, as shown in FIG. 5A, the communication system 100 according to the present embodiment requires only one terminal 60 to communicate with the short-range communication device 71 that sends and receives information related to each of the control devices 80, without providing an expensive console 122 for each of the control devices 80. As has been described, according to the communication system 100, it is possible to communicate with the automatic guided vehicle 10 in a suitable manner.

According to the communication system 100 for the automatic guided vehicle 10, the plurality of control devices 80 is mounted on the automatic guided vehicle 10, and the terminal 60 can use information related to each of the control devices 80 based on the identification information. This allows the operator to use information from each of the plurality of control devices 80 mounted on the automatic guided vehicle 10 by using one terminal 60.

The automatic guided vehicle 10 has a plurality of pieces of identification information, each being linked to its associated one of the plurality of control devices 80, and the terminal 60 can use information related to each of the control devices 80 to which the identification information is linked. In this case, the operator can use information that the operator wants to grasp only by reading the identification information corresponding to the control device 80 that the operator wants to grasp.

The terminal 60 selects at least one of the control devices 80 from the plurality of control devices 80 each identified with the identification information, and uses the information related to the selected control device 80. In this case, the operator can selectively obtain information of the control device 80 that the operator want to grasp, out of the plurality of control devices 80 of the automatic guided vehicle 10, by only reading one of the pieces of identification information.

A short-range connection means facilitates communication between the terminal 60 and the automatic guided vehicles 10. This permits achieving communication with the automatic guided vehicle 10 positioned nearby quickly for the operator, without being influenced by congestion of a wide area network. Further, communication with the automatic guided vehicle 10 positioned nearby can be achieved, so that accidental communication with the other automatic guided vehicles 10 may be prevented for the operator.

The present invention is not limited to the above-described embodiment.

For example, although the automatic guided vehicle 10 has a plurality of control devices 80 in the above-described embodiment, the automatic guided vehicle 10 may have only one control device 80 if a plurality of functions is integrated.

### Reference Signs List

- 10: automatic guided vehicle
- 55: mark (identification information)
- 60: terminal
- 71: short-range communication device (communication device)
- 80: control device
- 100: communication system
- 101: traffic control tower (upper level control device)

## Claims

1. A communication system (100) for an automatic guided vehicle (10) arranged to transport a container in a harbor, comprising:
the automatic guided vehicle (10), having a plurality of control devices (80) mounted on the automatic guided vehicle (10) and each arranged to perform a specific function of the automatic guided vehicle (10);
a short-range communication device (71) mounted on the automatic guided vehicle (10), and configured to send and receive information related to the plurality of control devices (80) enabling to retrieve a state of each one of the plurality of control devices;
a terminal (60) connectable with the short-range communication device (71);
a traffic control tower (101) arranged to send wirelessly a command to the automatic guided vehicle (10), so that the automatic guided vehicle (10) travels on a preset travel route (R);
wherein the automatic guided vehicle (10) has a plurality of pieces of identification information (55) readable by the terminal (60), each being linked to its associated one of the plurality of control devices (80), and
the terminal (60) is communicable with the short-range communication device (71) based on the identification information (55) when read by the terminal (60), and it is configured to retrieve state information of a control device (80) based on the read identification information (55) and
the terminal (60) is arranged to use the information of each of the control devices (80) to which the identification information (55) is linked, at a timing at which maintenance and inspection is performed.

2. The communication system (100) for the automatic guided vehicle (10) according to claim 1, wherein
the terminal (60) is arranged to select at least one of the control devices (80) from the plurality of control devices (80) each identified with the identification information (55), and is arranged to use the information related to the selected one of the control devices (80).

## Patentansprüche

1. Kommunikationssystem (100) für ein automatisches geführtes Fahrzeug (10), das dazu eingerichtet ist, einen Behälter in einem Hafen zu transportieren, umfassend:
das automatische geführte Fahrzeug (10), das eine Vielzahl von Steuervorrichtungen (80) aufweist, die an dem automatischen geführten Fahrzeug (10) montiert sind und jeweils dazu eingerichtet sind, eine spezifische Funktion des automatischen geführten Fahrzeugs (10) durchzuführen;
eine Kurzstreckenkommunikationsvorrichtung (71), die an dem automatischen geführten Fahrzeug (10) montiert ist, und dazu ausgestaltet ist, Informationen zu senden und zu empfangen, welche die Vielzahl von Steuervorrichtungen (80) betreffen, und das Abrufen eines Zustands von jeder der Vielzahl von Steuervorrichtungen ermöglicht;
ein Endgerät (60), das mit der Kurzstreckenkommunikationsvorrichtung (71) verbindbar ist;
einen Verkehrskontrollturm (101), der dazu eingerichtet ist, einen Befehl an das automatische geführte Fahrzeug (10) drahtlos zu senden, derart dass das automatische geführte Fahrzeug (10) auf einer voreingestellten Fahrtroute (R) fährt;
wobei
das automatische geführte Fahrzeug (10) eine Vielzahl von Identifikationsinformationselementen (55) aufweist, die durch das Endgerät (60) lesbar sind und die jeweils mit ihrer zugehörigen von der Vielzahl von Steuervorrichtungen (80) verknüpft sind, und
das Endgerät (60) mit der Kurzstreckenkommunikationsvorrichtung (71) basierend auf den Identifikationsinformationen (55) verbindbar ist, wenn sie durch das Endgerät (60) gelesen werden, und dazu ausgestaltet ist, Zustandsinformationen einer Steuervorrichtung (80) basierend auf den gelesenen Identifikationsinformationen (55) abzurufen, und
das Endgerät (60) dazu eingerichtet ist, die Informationen von jeder der Steuervorrichtungen (80), mit denen die Identifikationsinformationen (55) verknüpft sind, an einem Zeitpunkt zu verwenden, an dem Wartung und Inspektion durchgeführt werden.

2. Kommunikationssystem (100) für das automatische geführte Fahrzeug (10) nach Anspruch 1, wobei
das Endgerät (60) dazu eingerichtet ist, mindestens eine der Steuervorrichtungen (80) von der Vielzahl von Steuervorrichtungen (80) auszuwählen, die jeweils mit den Identifikationsinformationen (55) identifiziert werden, und dazu eingerichtet ist, die Informationen zu verwenden, welche die ausgewählte von den Steuervorrichtungen (80) betreffen.

## Revendications

1. Système de communication (100) pour un véhicule à guidage automatique (10) conçu pour transporter un conteneur dans un port, comprenant :
le véhicule à guidage automatique (10) doté d'une pluralité de dispositifs de commande (80) montés sur le véhicule à guidage automatique (10) et conçus chacun pour effectuer une fonction spécifique du véhicule à guidage automatique (10) ;
un dispositif de communication à courte portée (71) monté sur le véhicule à guidage automatique (10) et configuré pour envoyer et recevoir des informations relatives à la pluralité de dispositifs de commande (80), permettant de récupérer un état de chacun de la pluralité de dispositifs de commande ;
un terminal (60) pouvant être connecté au dispositif de communication à courte portée (71) ;
une tour de commande de circulation (101) conçue pour envoyer sans fil une instruction au véhicule à guidage automatique (10) de sorte que le véhicule à guidage automatique (10) se déplace sur un itinéraire de déplacement (R) prédéfini ;
dans lequel
le véhicule à guidage automatique (10) a une pluralité d'éléments d'informations d'identification (55) lisibles par le terminal (60), chacun étant lié au dispositif de commande de la pluralité de dispositifs de commande (80) qui lui est associé et
le terminal (60) peut communiquer avec le dispositif de communication à courte portée (71) sur la base des informations d'identification (55) lorsqu'elles sont lues par le terminal (60), et il est configuré pour récupérer des informations d'état d'un dispositif de commande (80) sur la base des informations d'identification (55) lues, et
le terminal (60) est conçu pour utiliser les informations de chacun des dispositifs de commande (80) auxquels les informations d'identification (55) sont liées à un moment où une maintenance et une inspection sont effectuées.

2. Système de communication (100) pour le véhicule à guidage automatique (10) selon la revendication 1, dans lequel
le terminal (60) est conçu pour sélectionner au moins un des dispositifs de commande (80) de la pluralité de dispositifs de commande (80) identifiés chacun par les informations d'identification (55), et est conçu pour utiliser les informations relatives au dispositif de commande sélectionné des dispositifs de commande (80).
